# EUROPEAN PATENT SPECIFICATION

(11) **EP 1 321 029 B1**
(45) Date of publication and mention of the grant of the patent: **30.03.2005**
(21) Application number: 02079538.1
(22) Date of filing: 31.10.2002
(51) Int. Cl.: A01J 5/04, A01J 5/08

(54) **A device and a teat cup for milking animals**
Vorrichtung und Zitzenbecher zum Melken von Tieren
Dispositif et gobelet trayeur pour la traite d'animaux

(30) Priority: 20.12.2001 NL 1019625
(43) Date of publication of application: 25.06.2003
(73) Proprietor: Lely Enterprises AG, 6300 ZUG (CH)
(72) Inventor: Veenstra, Aalze, 2805 SJ Gouda (NL); Fransen, Renatus Ignatius Josephus, 3135 ZD Vlaardingen (NL)
(74) Representative: Corten, Maurice Jean F.M.

(56) References cited:
- WO-A-99/34664
- NL-C- 1 004 196

## Description

The invention relates to a device for milking animals, according to the preamble of claim 1.

The invention also relates to a teat cup for milking animals, according to the preamble of claim 13.

Such a device and teat cup are known from Dutch patent 1004196. The teat cup is usually cleaned after each milking run, and the milk line and, if desired, other components are cleaned after a certain number of milking runs. Although the known device functions properly, it has been found that the construction can be improved with a view to a more efficient cleaning and/or rinsing of the teat cup and the milk line.

For this purpose, according to an aspect of the invention, a device of the above-described type comprises the measures of the characterizing part of claim 1. Just because of the fact that, according to the invention, the foremilk reservoir is integrated in the teat cup and is not separated therefrom, like it is in the state of the art, it is made possible in a simple manner to clean the teat cup separately as well as to clean the teat cup and the milk line and, if desired, other components.

In an embodiment of a device according to the invention, the inlet of the foremilk reservoir is provided with an inlet-closing means. When milking animals it is of importance that the foremilk is separated from the further milk, because the foremilk is often somewhat infected and/or of a different quality. With the aid of the inlet-closing means it is possible to close the foremilk reservoir, in particular the inlet thereof, when the foremilk reservoir is completely filled with foremilk. The inlet-closing means is preferably constituted by a float.

In a preferred embodiment according to the invention, the float is designed as a ball. Just because of the geometric shape of the ball there is created a correct closing of the inlet.

In a preferred embodiment according to the invention, the float is made of synthetic material or rubber. A float made of such material has a long useful life without the quality of the milk being adversely affected by the material.

According to another embodiment of the invention, the teat cup is provided with a milk-line-closing means for closing the connection between the teat cup and the milk line, the milk-line-closing means being a controllable closing means. This makes it possible to prevent cleaning or rinsing liquid from entering the milk line during cleaning of the teat cup.

In a further embodiment of a device according to the invention, the controllable milk-line-closing means is suitable for operating under the control of a milk level sensor, such as for example a milk conductivity sensor or an optical or an acoustic sensor. This makes it possible for the device to function to a high degree of automation, both during milking of an animal and during cleaning of the teat cup and/or the teat cup and the milk line and, if desired, other components.

The sensor is preferably disposed in the foremilk reservoir, so that there can be made for example a correct separation between foremilk and the further milk obtained from the animal.

Alternatively or additionally, there is obtained a correct separation between foremilk and further milk if the controllable milk-line-closing means is suitable for operating under the control of a sensor for detecting the closing of the inlet.

The controllable milk-line-closing means is preferably computer-controlled. In particular in the latter case, it is extremely advantageous if the outlet-closing means is also computer-controlled.

For the purpose of discharging the milk received in the foremilk reservoir, the outlet-closing means releases the outlet, for example when after milking the teat cup comes into open connection with the outside air, or when the teat cup is included in a rinsing line system for cleaning only the teat cup or when the teat cup is included in a rinsing line system and rinsing of the teat cup and the milk line system connected thereto is finished. In other words, as soon as an animal has been milked out and the vacuum in said teat cup and the milk line connected thereto is removed, a relevant teat cup is disconnected and the outlet of the relevant foremilk reservoir is released, so that the milk present in the foremilk reservoir can flow away. However, also when the teat cups and, if desired, the milk line system have to be cleaned and a rinsing liquid is brought into the teat cup and the milk line connected thereto in the usual way with the aid of a rinsing element that is connected to a teat cup, then, because of the fact that the foremilk reservoir fills with rinsing liquid, it will be necessary to discharge said rinsing liquid, in particular as soon as the teat cup is disconnected from the rinsing element.

The invention may in particular be applied if the device is provided with a milking parlour with a milking robot for automatically connecting the at least one teat cup to a respective teat of an animal to be milked.

The invention also relates to a teat cup for milking animals, such as cows, characterized in that the teat cup is provided with a foremilk reservoir for containing a certain amount of foremilk, substantially obtained at the beginning of the milking process, said foremilk reservoir being provided with an inlet and an outlet with an outlet-closing means for the foremilk. Advantageous embodiments are described in claims 14 to 23.

The invention will now be explained in greater detail with reference to the accompanying drawing, in which:
Figure 1 shows diagrammatically a first embodiment of a part of a device according to the invention, and
Figure 2 shows diagrammatically a second embodiment of a part of a device according to the invention.

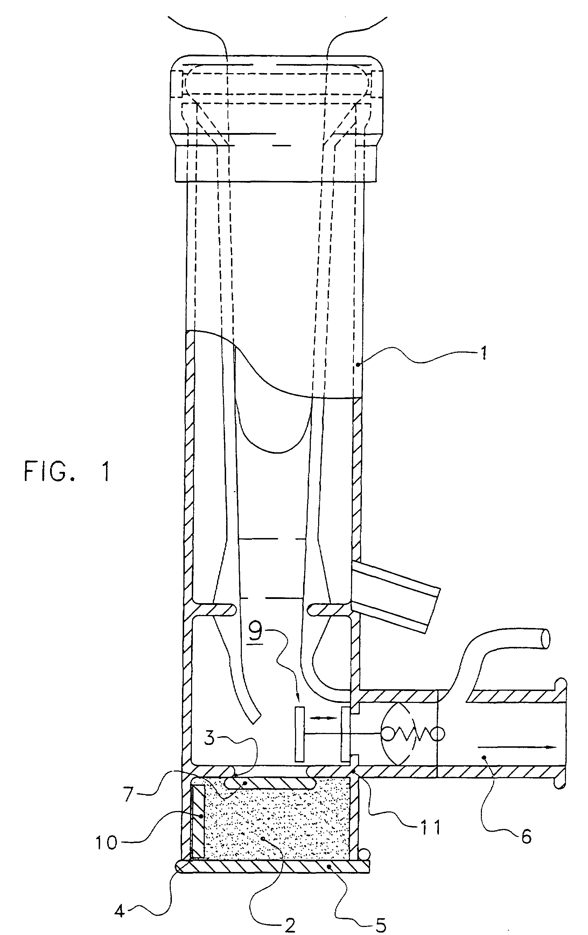

Of the teat cups to be connected automatically to the teats of an animal to be milked by means of a not further shown milking robot, only one teat cup 1 is shown in Figure 1. Like the other teat cups, said teat cup 1 can be connected, via a milk line 6, to a (non-shown) milk container.

A foremilk reservoir 2 for containing a certain amount of foremilk, substantially obtained at the beginning of the milking process, is integrated in the teat cup 1. According to the invention, by 'integrated' is meant that, during the use of the teat cup, the teat cup and the foremilk reservoir constitute an integral whole. Therefore, it is possible for the teat cup and the foremilk reservoir to be separate components that can be interconnected, or to be designed as one single component.

The foremilk reservoir 2 is provided with an inlet 3 and an outlet 4 with an outlet-closing means 5 for the foremilk. In the embodiment shown, the inlet 3 is disposed in a partition that separates the foremilk reservoir from the teat cup space.

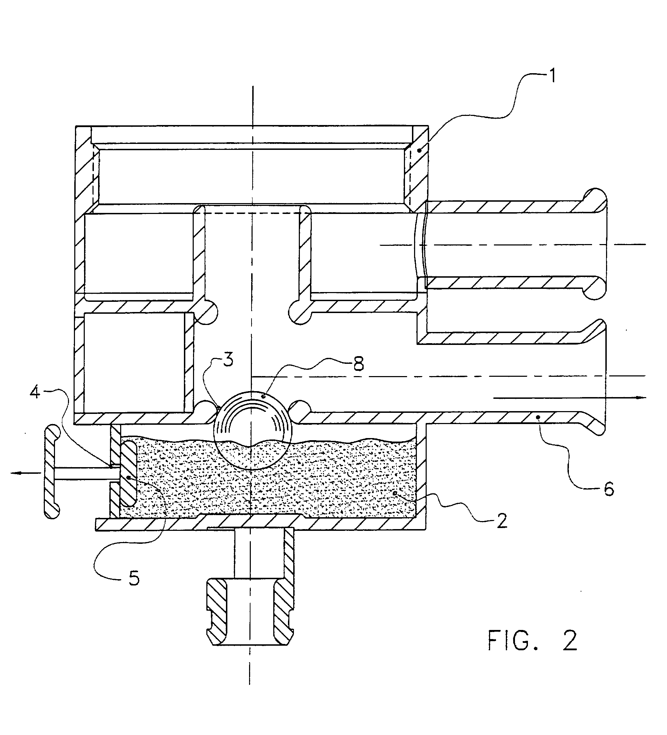

The inlet 3 of the foremilk reservoir 2 is provided with an inlet-closing means 7 which, in the embodiments shown in Figures 1 and 2, is constituted by a float that is capable of floating on the milk that comes into the foremilk reservoir. If the inlet 3 is circular, the float is preferably designed as a ball 8, as shown in Figure 2. Thus there is created a proper closing. Alternatively, the float may also be designed as a disc-shaped element, as shown diagrammatically in Figure 1. In this case the float is made in particular of synthetic material or rubber.

It will be obvious that, when the foremilk reservoir 2 is filled with milk, the float closes the inlet 3, so that further milk cannot enter the foremilk reservoir 2, but can be discharged to the milk container via the milk line 6.

Via a connection 11, the teat cup 1, in particular the teat cup space, is connected to the milk line 6. In order to prevent that, undesirably, foremilk still enters the milk line 6, in the embodiment shown in Figure 1, the teat cup 1 is provided with a controllable milk-line-closing means 9. By correct control, in particular by a (non-shown) computer, the connection 11 can be closed during filling of the foremilk reservoir 2.

The control of the controllable milk-line-closing means 9 may also take place by means of a milk level sensor 10, such as for example a milk conductivity sensor or an optical or an acoustic sensor. This sensor 10 is preferably disposed in the foremilk reservoir 2. When this sensor detects that the level comes above a certain threshold value, the sensor can emit a signal ensuring that the milk-line-closing means 9 releases the connection 11.

Alternatively or additionally, the controllable milk-line-closing means 9 may be controlled by a sensor (for example a contact sensor) for detecting the closing of the inlet.

The foremilk reservoir 2 is provided with an outlet 4 that can be closed by an outlet-closing means 5. This outlet-closing means 5 is preferably designed such that at the moment when a vacuum is applied to the teat cup 1, the foremilk reservoir 2 is closed. Consequently, for this purpose all sorts of closing means can be used, such as an outlet-closing means that is operated in an electromagnetic, hydraulic or pneumatic way.

The milk obtained with the aid of the teat cups after the foremilk, in particular after the inlet of the foremilk reservoir has been closed, will not flow to the foremilk reservoir 2, but will flow via the milk line 6 to the milk container.

When only the teat cup 1 has to be cleaned, then the teat cup 1 is connected in the usual way to a (non-shown) rinsing element by means of which a rinsing liquid is passed into the teat cup 1 and, if desired, also over the edge of the teat cup 1. By causing the milk-line-closing means 9 to close the connection 11, said rinsing liquid cannot enter the milk line 6. Before cleaning, the foremilk can be discharged by operating the outlet-closing means. The discharge of the foremilk can also take place simultaneously with the cleaning. It is pointed out that in the embodiment shown in Figure 2 no milk-line-closing means is depicted. The closing of the milk line can take place in this case by a further valve or the like disposed in the milk line.

When both the teat cup and the milk line system have to be cleaned, then the teat cup is connected again in the usual way to a rinsing element. The control of the closing means can then be such that first the foremilk reservoir 2 is cleaned and subsequently the milk line and, if desired, other components. In this way the teat cups and the lines connected thereto including other components, if desired, are cleaned by rinsing in an accurate and simple manner.

## Claims

1. A device for milking animals, such as cows, which device comprises:
at least one teat cup (1),
a foremilk reservoir (2) for containing a certain amount of foremilk, substantially obtained at the beginning of the milking process, said foremilk reservoir (2) being provided with an inlet (3) and an outlet (4) with an outlet-closing means (5) for the foremilk,
a milk container for containing milk obtained, and
at least one milk line (6) connecting the teat cup (1) to the milk container,
**characterized in that** the foremilk reservoir (2) is integrated in the teat cup (1).

2. A device as claimed in claim 1, **characterized in that** the inlet (3) of the foremilk reservoir (2) is provided with an inlet-closing means (7).

3. A device as claimed in claim 2, **characterized in that** the inlet-closing means (7) is constituted by a float.

4. A device as claimed in claim 3, **characterized in that** the float is designed as a ball (8).

5. A device as claimed in claim 3 or "4, **characterized in that** the float is made of synthetic material or rubber.

6. A device as claimed in any one of the preceding claims, **characterized in that** the teat cup (1) is provided with a milk-line-closing means (9) for closing the connection (11) between the teat cup (1) and the milk line (6), the milk-line-closing means (9) being a controllable closing means.

7. A device as claimed in claim 6, **characterized in that** the controllable milk-line-closing means (9) is suitable for operating under the control of a milk level sensor (10), such as for example a milk conductivity sensor or an optical or an acoustic sensor.

8. A device as claimed in claim 7, **characterized in that** the sensor (10) is disposed in the foremilk reservoir (2) .

9. A device as claimed in claim 6 with reference to claim 2, **characterized in that** the controllable milk-line-closing means (9) is suitable for operating under the control of a sensor for detecting the closing of the inlet.

10. A device as claimed in any one of claims 6 to 9, **characterized in that** the controllable milk-line-closing means (9) is computer-controlled.

11. A device as claimed in any one of the preceding claims, **characterized in that** the outlet-closing means (5) is computer-controlled.

12. A device as claimed in any one of the preceding claims, **characterized in that** the device is provided with a milking parlour with a milking robot for automatically connecting the at least one teat cup (1) to a respective teat of an animal to be milked.

13. A teat cup (1) for milking animals, such as cows, **characterized in that** the teat cup (1) is provided with a foremilk reservoir (2) for containing a certain amount of foremilk, substantially obtained at the beginning of the milking process, said foremilk reservoir (2) being provided with an inlet (3) and an outlet (4) with an outlet-closing means (5) for the foremilk.

14. A teat cup (1) as claimed in claim 13, **characterized in that** the inlet (3) of the foremilk reservoir (2) is provided with an inlet-closing means (7).

15. A teat cup (1) as claimed in claim 14, **characterized in that** the inlet-closing means (7) is constituted by a float.

16. A teat cup (1) as claimed in claim 15, **characterized in that** the float is designed as a ball (8).

17. A teat cup (1) as claimed in claim 15 or 16, **characterized in that** the float is made of synthetic material or rubber.

18. A teat cup (1) as claimed in any one of the preceding claims 13 to 17, **characterized in that** the teat cup (1) is provided with a connection (11) for a milk line, and with a milk-line-closing means (9) for closing the connection (11) between the teat cup (1) and the milk line (6), the milk-line-closing means (9) being a controllable closing means.

19. A teat cup (1) as claimed in claim 18, **characterized in that** the controllable milk-line-closing means (9) is suitable for operating under the control of a milk level sensor (10), such as for example a milk conductivity sensor or an optical or an acoustic sensor.

20. A teat cup (1) as claimed in claim 19, **characterized in that** the sensor (10) is disposed in the foremilk reservoir (2).

21. A teat cup (1) as claimed in claim 18 with reference to claim 14, **characterized in that** the controllable milk-line-closing means (9) is suitable for operating under the control of a sensor for detecting the closing of the inlet (3).

22. A teat cup (1) as claimed in any one of claims 18 to 21, **characterized in that** the controllable milk-line-closing means (9) is computer-controlled.

23. A teat cup (1) as claimed in any one of the preceding claims 13 to 22, **characterized in that** the outlet-closing means (5) is computer-controlled.

## Patentansprüche

1. Vorrichtung zum Melken von Tieren, wie z. B. Kühen, wobei die Vorrichtung folgende Teile umfaßt:
- mindestens einen Zitzenbecher (1),
- einen Vorgemelkbehälter (2) zur Aufnahme einer bestimmten Menge an Vorgemelk, das im wesentlichen zu Beginn des Melkvorganges gewonnen wird, wobei der Vorgemelkbehälter (2) einen Einlaß (3) und einen Auslaß (4) mit einer Auslaßverschlußvorrichtung (5) für das Vorgemelk aufweist,
- einen Milchbehälter zur Aufnahme gewonnener Milch und
- mindestens eine Milchleitung (6), die den Zitzenbecher (1) mit dem Milchbehälter verbindet,
**dadurch gekennzeichnet, daß** der Vorgemelkbehälter (2) in den Zitzenbecher (1) integriert ist.

2. Vorrichtung nach Anspruch 1,
**dadurch gekennzeichnet, daß** der Einlaß (3) des Vorgemelkbehälters (2) mit einer Einlaßverschlußvorrichtung (7) versehen ist.

3. Vorrichtung nach Anspruch 2,
**dadurch gekennzeichnet, daß** die Einlaßverschlußvorrichtung (7) durch einen Schwimmer gebildet ist.

4. Vorrichtung nach Anspruch 3,
**dadurch gekennzeichnet, daß** der Schwimmer als Kugel (8) ausgeführt ist.

5. Vorrichtung nach Anspruch 3 oder 4,
**dadurch gekennzeichnet, daß** der Schwimmer aus Kunststoff oder Gummi hergestellt ist.

6. Vorrichtung nach einem der vorhergehenden Ansprüche,
**dadurch gekennzeichnet, daß** der Zitzenbecher (1) mit einer Milchleitungs-Verschlußvorrichtung (9) zum Verschließen der Verbindung (11) zwischen dem Zitzenbecher (1) und der Milchleitung (6) versehen ist, wobei die Milchleitungs-Verschlußvorrichtung (9) eine steuerbare Verschlußvorrichtung ist.

7. Vorrichtung nach Anspruch 6,
**dadurch gekennzeichnet, daß** die steuerbare Milchleitungs-Verschlußvorrichtung (9) zum Betrieb unter Steuerung durch einen Milchpegelsensor (10), wie z. B. einem Milchleitfähigkeitssensor oder einem optischen oder akustischen Sensor, geeignet ist.

8. Vorrichtung nach Anspruch 7,
**dadurch gekennzeichnet, daß** der Sensor (10) in dem Vorgemelkbehälter (2) angeordnet ist.

9. Vorrichtung nach Anspruch 6 unter Bezugnahme auf Anspruch 2,
**dadurch gekennzeichnet, daß** die steuerbare Milchleitungs-Verschlußvorrichtung (9) zum Betrieb unter Steuerung durch einen Sensor geeignet ist, der den Verschluß des Einlasses detektiert.

10. Vorrichtung nach einem der Ansprüche 6 bis 9,
**dadurch gekennzeichnet, daß** die steuerbare Milchleitungs-Verschlußvorrichtung (9) rechnergesteuert ist.

11. Vorrichtung nach einem der vorhergehenden Ansprüche,
**dadurch gekennzeichnet, daß** die Auslaßverschlußvorrichtung (5) rechnergesteuert ist.

12. Vorrichtung nach einem der vorhergehenden Ansprüche,
**dadurch gekennzeichnet, daß** die Vorrichtung einen Melkstand mit einem Melkroboter zum automatischen Anschließen des mindestens einen Zitzenbechers (1) an eine entsprechende Zitze eines zu melkenden Tieres aufweist.

13. Zitzenbecher (1) zum Melken von Tieren, wie z. B. Kühen,
**dadurch gekennzeichnet, daß** der Zitzenbecher (1) mit einem Vorgemelkbehälter (2) zur Aufnahme einer bestimmten Menge an Vorgemelk versehen ist, das im wesentlichen zu Beginn des Melkvorganges gewonnen wird, wobei der Vorgemelkbehälter (2) einen Einlaß (3) und einen Auslaß (4) mit einer Auslaßverschlußvorrichtung (5) für das Vorgemelk aufweist.

14. Zitzenbecher (1) nach Anspruch 13,
**dadurch gekennzeichnet, daß** der Einlaß (3) des Vorgemelkbehälters (2) mit einer Einlaßverschlußvorrichtung (7) versehen ist.

15. Zitzenbecher (1) nach Anspruch 14,
**dadurch gekennzeichnet, daß** die Einlaßverschlußvorrichtung (7) durch einen Schwimmer gebildet ist.

16. Zitzenbecher (1) nach Anspruch 15,
**dadurch gekennzeichnet, daß** der Schwimmer als Kugel (8) ausgeführt ist.

17. Zitzenbecher (1) nach Anspruch 15 oder 16,
**dadurch gekennzeichnet, daß** der Schwimmer aus Kunststoff oder Gummi hergestellt ist.

18. Zitzenbecher (1) nach einem der vorhergehenden Ansprüche 13 bis 17,
**dadurch gekennzeichnet, daß** der Zitzenbecher (1) mit einer Verbindung (11) für eine Milchleitung und mit einer Milchleitungs-Verschlußvorrichtung (9) zum Verschließen der Verbindung (11) zwischen dem Zitzenbecher (1) und der Milchleitung (6) versehen ist, wobei die Milchleitungs-Verschlußvorrichtung (9) eine steuerbare Verschlußvorrichtung ist.

19. Zitzenbecher (1) nach Anspruch 18,
**dadurch gekennzeichnet, daß** die steuerbare Milchleitungs-Verschlußvorrichtung (9) zum Betrieb unter Steuerung durch einen Milchpegelsensor (10), wie z. B. einem Milchleitfähigkeitssensor oder einem optischen oder akustischen Sensor, geeignet ist.

20. Zitzenbecher (1) nach Anspruch 19,
**dadurch gekennzeichnet, daß** der Sensor (10) in dem Vorgemelkbehälter (2) angeordnet ist.

21. Zitzenbecher (1) nach Anspruch 18 unter Bezugnahme auf Anspruch 14,
**dadurch gekennzeichnet, daß** die steuerbare Milchleitungs-Verschlußvorrichtung (9) zum Betrieb unter Steuerung durch einen Sensor geeignet ist, der den Verschluß des Einlasses (3) detektiert.

22. Zitzenbecher (1) nach einem der Ansprüche 18 bis 21,
**dadurch gekennzeichnet, daß** die steuerbare Milchleitungs-Verschlußvorrichtung (9) rechnergesteuert ist.

23. Zitzenbecher (1) nach einem der vorhergehenden Ansprüche 13 bis 22,
**dadurch gekennzeichnet, daß** die Auslaßverschlußvorrichtung (5) rechnergesteuert ist.

## Revendications

1. Dispositif pour la traite d'animaux, tels que des vaches, lequel dispositif comprend :
au moins un gobelet trayeur (1),
un réservoir de premier lait (2) pour contenir une certaine quantité de premier lait, obtenue sensiblement au début du processus de traite, ledit réservoir de premier lait (2) étant pourvu d'une entrée (3) et une sortie (4) avec un moyen de fermeture de sortie (5) pour le premier lait,
une citerne à lait pour contenir le lait obtenu, et
au moins un lactoduc (6) reliant le gobelet trayeur (1) à la citerne à lait,
**caractérisé en ce que** le réservoir de premier lait (2) est intégré dans le gobelet trayeur (1).

2. Dispositif selon la revendication 1, **caractérisé en ce que** l'entrée (3) du réservoir de premier lait (2) est pourvue d'un moyen de fermeture d'entrée (7).

3. Dispositif selon la revendication 2, **caractérisé en ce que** le moyen de fermeture d'entrée (7) est constitué par un flotteur.

4. Dispositif selon la revendication 3, **caractérisé en ce que** le flotteur est conçu en tant que bille (8).

5. Dispositif selon la revendication 3 ou 4, **caractérisé en ce que** le flotteur est fait de matériau synthétique ou de caoutchouc.

6. Dispositif selon l'une quelconque des revendications précédentes, **caractérisé en ce que** le gobelet trayeur (1) est pourvu d'un moyen de fermeture de lactoduc (9) pour fermer la liaison (11) entre le gobelet trayeur (1) et le lactoduc (6), le moyen de fermeture de lactoduc (9) étant un moyen de fermeture pouvant être commandé.

7. Dispositif selon la revendication 6, **caractérisé en ce que** le moyen de fermeture de lactoduc pouvant être commandé (9) est approprié pour fonctionner sous le contrôle d'un capteur de niveau de lait (10), comme par exemple un capteur de conductivité du lait ou un capteur optique ou acoustique.

8. Dispositif selon la revendication 7, **caractérisé en ce que** le capteur (10) est disposé dans le réservoir de premier lait (2).

9. Dispositif selon la revendication 6 faisant référence à la revendication 2, **caractérisé en ce que** le moyen de fermeture de lactoduc pouvant être commandé (9) est approprié pour fonctionner sous le contrôle d'un capteur pour détecter la fermeture de l'entrée.

10. Dispositif selon l'une quelconque des revendications 6 à 9, **caractérisé en ce que** le moyen de fermeture de lactoduc pouvant être commandé (9) est commandé par ordinateur.

11. Dispositif selon l'une quelconque des revendications précédentes, **caractérisé en ce que** le moyen de fermeture de sortie (5) est commandé par ordinateur.

12. Dispositif selon l'une quelconque des revendications précédentes, **caractérisé en ce que** le dispositif est pourvu d'une salle de traite avec un robot de traite pour relier automatiquement le au moins un gobelet trayeur (1) à un trayon respectif d'un animal destiné à être trait.

13. Gobelet trayeur (1) pour la traite d'animaux, tels que des vaches, **caractérisé en ce que** le gobelet trayeur (1) est pourvu d'un réservoir de premier lait (2) pour contenir une certaine quantité de premier lait, obtenue sensiblement au début du processus de traite, ledit réservoir de premier lait (2) étant pourvu d'une entrée (3) et une sortie (4) avec un moyen de fermeture de sortie (5) pour le premier lait.

14. Gobelet trayeur (1) selon la revendication 13, **caractérisé en ce que** l'entrée (3) du réservoir de premier lait (2) est pourvue d'un moyen de fermeture d'entrée (7).

15. Gobelet trayeur (1) selon la revendication 14, **caractérisé en ce que** le moyen de fermeture d'entrée (7) est constitué par un flotteur.

16. Gobelet trayeur (1) selon la revendication 15, **caractérisé en ce que** le flotteur est conçu en tant que bille (8).

17. Gobelet trayeur (1) selon la revendication 15 ou 16, **caractérisé en ce que** le flotteur est fait de matériau synthétique ou de caoutchouc.

18. Gobelet trayeur (1) selon l'une quelconque des revendications précédentes 13 à 17, **caractérisé en ce que** le gobelet trayeur (1) est pourvu d'une liaison (11) pour un lactoduc, et d'un moyen de fermeture de lactoduc (9) pour fermer la liaison (11) entre le gobelet trayeur (1) et le lactoduc (6), le moyen de fermeture de lactoduc (9) étant un moyen de fermeture pouvant être commandé.

19. Gobelet trayeur (1) selon la revendication 18, **caractérisé en ce que** le moyen de fermeture de lactoduc pouvant être commandé (9) est approprié pour fonctionner sous le contrôle d'un capteur de niveau de lait (10), comme par exemple un capteur de conductivité du lait ou un capteur optique ou acoustique.

20. Gobelet trayeur (1) selon la revendication 19, **caractérisé en ce que** le capteur (10) est disposé dans le réservoir de premier lait (2).

21. Gobelet trayeur (1) selon la revendication 18 en faisant référence à la revendication 14, **caractérisé en ce que** le moyen de fermeture de lactoduc pouvant être commandé (9) est approprié pour fonctionner sous le contrôle d'un capteur pour détecter la fermeture de l'entrée (3).

22. Gobelet trayeur (1) selon l'une quelconque des revendications 18 à 21, **caractérisé en ce que** le moyen de fermeture de lactoduc pouvant être commandé (9) est commandé par ordinateur.

23. Gobelet trayeur (1) selon l'une quelconque des revendications précédentes 13 à 22, **caractérisé en ce que** le moyen de fermeture de sortie (5) est commandé par ordinateur.
